# EUROPEAN PATENT SPECIFICATION

(11) **EP 0 393 102 B1**
(45) Date of publication and mention of the grant of the patent: **04.01.1995**
(21) Application number: 89900093.9
(22) Date of filing: 30.11.1988
(51) Int. Cl.: B29C 41/22, B29D 7/00, B29L 7/00, B44C 3/00

(54) **METHOD FOR MAKING DECORATIVE WEBS, SHEETS OR PANELS**
VERFAHREN ZUR HERSTELLUNG DEKORATIVER BÄNDER, BLÄTTER UND PANEELE
PROCEDE DE FABRICATION DE BANDES, DE FEUILLES OU DE PANNEAUX DECORATIFS

(30) Priority: 01.12.1987 SE 8704779; 15.03.1988 SE 8800924
(43) Date of publication of application: 24.10.1990
(73) Proprietor: TARKETT AB, S-372 03 Ronneby (SE)
(72) Inventor: LUNDQUIST, Eskil, Sigfrid, S-372 00 Ronneby (SE); WEINEISEN, Franz, S-372 05 Johannishus (SE); KONOW, Anders, Volkman, S-372 00 Ronneby (SE); GUSTAVSSON, Björn, Jan-Peter, S-371 38 Karlskrona (SE)
(74) Representative: Andersson, Per-Olof
(86) International application number: SE8800654
(87) International publication number: WO8905224

(56) References cited:
- CH-C- 550 656
- DE-A- 1 629 805
- SE-B- 426 297

## Description

The present invention relates to a method for making decorative webs, sheets or panels.

Such decorative plastic webs etc can be made in that differently coloured granules, paste droplets, powders etc are fused together so as to form irregularly marbled layers of mingled shades, which may have a substantial thickness. Such a web is resistant to wear but is highly restricted as to the choice of pattern, because only products of mingled shades can be obtained. Another technique of making decorative plastic webs etc involves applying a pattern in the form of a thin printed film of high pigment concentration to a plastic carrier layer, and covering it with a transparent surface layer. In contrast to the first-mentioned technique, the latter technique allows the web to be provided with any desired pattern, but one drawback is that the pattern must be protected by a wearing layer which is decisive of the wearing strength of the product. If the wearing layer is worn out, the pattern layer will soon be ruined, and the web must be discared for aesthetic reasons.

To obviate the drawbacks of these techniques which have been known for long, an arrangement has been provided, by means of which plastic material of different colour and/or structure is sprayed through nozzles onto a carrier web during relative movement of the carrier web and the nozzles. This relative movement is controlled by an electronic system, and comparatively complicated patterns can be formed. The product obtained is coloured throughout and thus resistant to wear, but sometimes the spraying of the plastic material causes problems.

In the method according to DE-A-30 16 756, dry powder is applied to a web 1, 2 consisting of a carrier (glass fibre) coated with a plastic layer, and is caused to stick in wet paint or plastic. Excess powder is removed, and the powder left in the wet paint or plastic is cured therewith. In the applicant's view, this is, as previously stated, something totally different from spraying an intricate liquid pattern on e.g. a paper web, applying a powder and removing the excess powder outside the pattern, and then curing the powder while at the same time the liquid is evaporated or absorbed by the powder. However, it cannot be denied that "wet paint" and "plastic" also are liquids, albeit of high-viscosity type, that the liquid is applied to a conveyor belt in a predetermined pattern, that decorative material is applied to said conveyor belt, that said liquid and the decorative material applied thereto are subjected to heat, that any decorative material which, when applied, lies outside said pattern and any excess of decorative material, which may occur in said pattern, are removed, or that said decorative material is molten or sintered to a coherent layer.

The object of the present invention is to provide an alternative, simpler method for making decorative plastic webs etc having a pattern which is the same throughout the product or at least is of considerable thickness and, if desired, can be extremely complicated. This object is achieved by the steps recited in appended claim 1.

The invention will now be described in more detail with reference to the accompanying drawings which schematically illustrate the principle of the invention.
Fig. 1 shows a production line and the associated devices, and
Figs 2-4 show a valve assembly and the associated nozzles in a plan view, end view and perspective view.

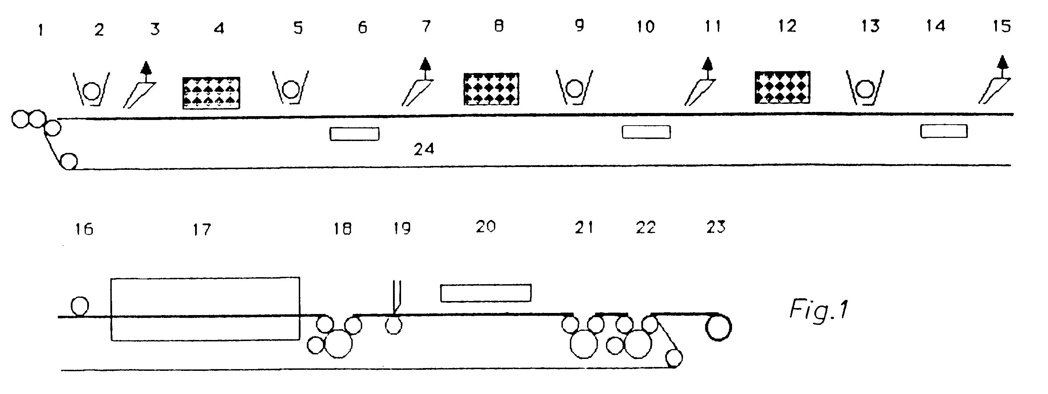

To carry out the method for making decorative webs, sheets or panels of plastic according to the invention the production line shown in Fig. 1 can conveniently be used. The line comprises an endless conveyor belt 24 preferably made of Teflon, which is supported by conventional means, of which only a few rollers are shown in the Figure. Above the upper part of the conveyor belt, there are a number of symbols marking the devices arranged at different stations along the belt. The symbols are designated 1-23, and the meaning of them will now be explained in detail.

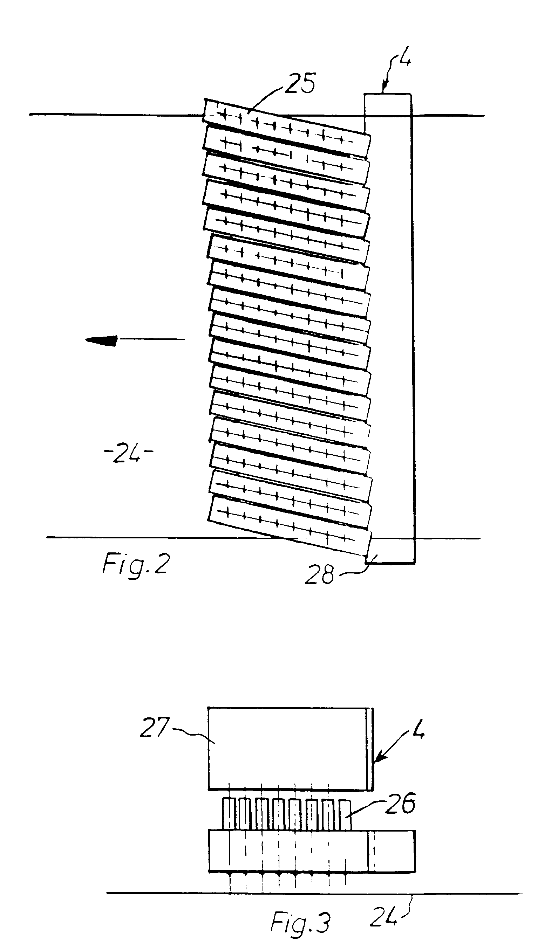

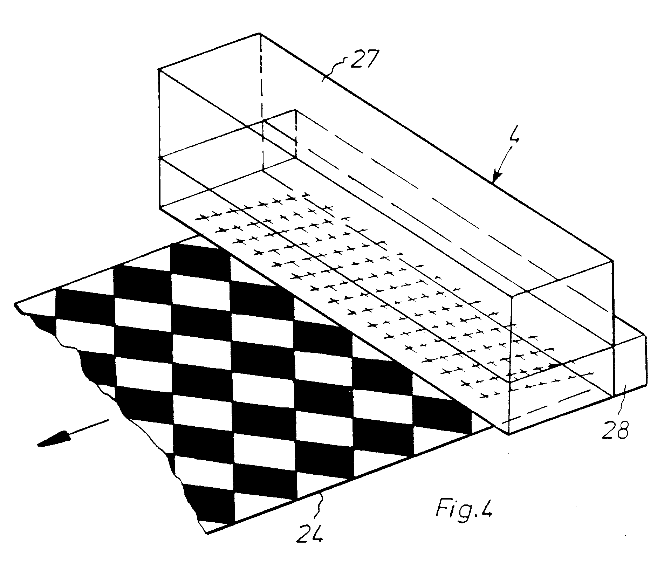

Numerals 1-3 designate devices by means of which a support can be applied to the conveyor belt 24. The support can have the form of a release paper, or a plastic layer which is insulated or reinforced, or it can be designed in some other manner, but it should be emphasised that such a support is not necessary - during the following steps, it is possible to work directly on the belt 24, provided that it is made of a suitable material. A device for applying liquid, e.g. water, is designated 4 and comprises, as shown in Figs 2, 3 and 4, a number of valve assemblies 25 each of which is provided with a number of nozzles 26. The valve assemblies 25 are mounted on a distribution pipe 28 in such manner that they extend somewhat obliquely in relation to the direction of motion of the underlying belt. In the present case, 16 valve assemblies 25 are arranged, each having 8 nozzles 26. The nozzles 26 are connected to the distribution pipe 28 which is, in turn, connected to a supply of liquid (not shown), and each nozzle can be opened and closed by means of a valve (not shown). The nozzle valves are opened and closed by electronic control means mounted in a casing 27 arranged above the valve assemblies. By being adjusted by the electronic control means, each nozzle 26 can emit a very thin jet of liquid onto the underlying belt 24 or the support applied thereto, and because of the large number of nozzles, also most complicated liquid patterns in the form of points (islets), and interrupted or coherent lines in any desired direction, as well as larger fields of liquid can be applied. After the application device 4 by means of which a desired liquid pattern has been applied, the belt reaches a dosing device 5, which is adapted to apply a decorative material, usually a colorant powder, to the liquid pattern just applied. The device 5 may comprise a trough having a discharge slit and a knurled roller arranged in the trough, and normally supplies the powder over the entire width of the belt, which however does not matter as will appear from the following. After the dosing device, an IR element 6 is mounted which can warm the powder and the liquid such that the colorant powder applied to the liquid pattern sinks. After the IR element, there follows a suction device 7 which sucks off all the colorant powder supplied by the device 5 and not adhering to the liquid pattern. Instead of removing the powder by suction, it can be removed by shaking or brushing. This means that both material outside the pattern and excess material in the pattern are removed and returned to the dosing device 5. The layer of powder on the belt 24 now has a clearly defined coloured pattern.

If only a single pattern in the powder layer is wanted, the aggregate now prepared can be transformed into solid shape, but normally the desired final pattern is more complicated and contains several colours, for which reason further stations comprising a device for applying liquid, a colorant powder dosing device, an IR element and a suction device, are arranged. Fig. 1 shows two such further stations in which said devices are designated 8, 9, 10 and 11 and, respectively, 12, 13, 14 and 15. By means of the liquid application devices 8 and 12, other patterns are applied than that produced by the device 4 as described above, and powders of different colour and/or structure are applied by means of the devices 9 and 13. It will be appreciated that any desired number of stations which depends on the complexity of the final pattern which is to be prepared, can be arranged. The pattern normally covers the entire width of the belt after the last station.

After the belt 24 has passed all stations for application of liquid and colorant powder, it will reach a levelling device 16, preferably a roller of conventional design which touches the powder layer. Subsequently, the belt runs into a curing or gelating furnace 17 of conventional design. Then follows a smoothing and cooling device 18, which is also designed in conventional manner. In some cases, one wishes to apply a further layer to the web now cured. If so, this occurs at 19 where a thin layer of a suitable material is spread over the entire web, which is precured in a subsequent device 20 and is finally cured in a device 21. The finished web is smoothed and cooled at 22, and it is wound at 23.

By "liquid" is here meant all liquids which after the application of powder can, by heating, either be evaporated or be caused to be sorbed by the powder material. For reasons of expense and health, water is preferred, but many other liquids which are vaporisable or compatible with the powder, are conceivable. The liquid can also have the form of a curing agent in a two-component system or be such that it dissolves the applied powder layer.

The liquid, e.g. the water, keeps the plastic granules together, and it will be appreciated that the heating by means of the IR elements before the final treatment is not allowed to go so far that the adhesion between the granules themselves and between the granules and the support is considerably impaired or ceases.

As indicated above, a layer of a binding agent, for example PVC plastic, can be applied by means of the device 1 to the belt 24 over the entire width thereof. The layer of binding agent preferably is applied to a support in the form of a removable release paper, an insulating or reinforcing material or some other suitable material which remains in the finished product. At 2, PVC powder is dosed over the belt and the layer of binding agent, respectively, and at 3, the excess of powder is removed such that a layer remains over the entire belt, which is of uniform thickness and adheres to the layer of binding agent. Then the method described above is carried out.

The arrangement shown in Fig. 1 and described above for carrying out the method according to the invention has appeared to function extremely well, but of course the method can be carried out in many other arrangements. The "designing" of the liquid pattern by means of the device 4 using a very large number of individually operable nozzles, is probably the best and most reliable method, but it is also possible to use a smaller number of nozzles which are relatively movable between the belt 24 and the device 4, for example in that the device 4 is made movable in two directions perpendicular to each other and is controlled by the electronic control means which actuate the nozzle valves. This makes the construction more complicated, but for simpler patterns, such a construction may be useful. The material which is applied in the liquid pattern by means of the dosing devices 5, 9 and 13, normally consists of colorant powder, but can also be powders, granules or flakes of quite different materials, such as metal, cellulose, mineral etc. The surface of the produced web can be smooth and have a surface layer or can have a structure, for example in that no surface layer is applied at 19, or in that the applied surface layer contains bodies of some kind, such that a web is obtained which is suited for use on non-skid floors. A relief of the web can be obtained by varying the amount of supplied liquid and by choosing the after-treatment. A foam can also be applied to the web, if desired. Moreover, the web can easily be reinforced by supplying a reinforcing material, as indicated above, or it can have an insulating layer. In its very simpliest form, the pattern binding agent is applied, as indicated above, directly to the running belt, without the belt being provided with a release paper or a felt, or a layer of binding agent and powder.

As described above, the method according to the invention renders it possible to make webs, sheets and panels of plastic or some other material in practically any desired pattern. Even short series are possible, since the pattern can easily be changed.

## Claims

1. A method for making decorative webs, sheets or panels, in which
a) water or another evaporable liquid is applied to a conveyor belt in a predetermined pattern by means of electronically operated nozzles which are distributed over the entire width of said conveyor belt, and which are arranged in a valve assembly connected to a supply of water or another evaporable liquid,
b) a decorative material in the form of powders, granules or flakes is applied to said conveyor belt, whereupon the water or other evaporable liquid and the decorative material applied thereto are subjected to heat,
c) any decorative material which, when applied, lies outside said pattern, and any excess of decorative material, which may occur in said pattern, are removed,
d) steps a), b) and c) are repeated the number of times required for the final pattern, while applying every time said water or other evaporable liquid in a new pattern and a decorative material of a colour and/or a structure deviating from that of the decorative material first applied,
e) said water or other evaporable liquid is evaporated or is caused to be included as a component in said decorative material, and
f) said decorative material is molten or sintered to a coherent layer.

2. The method as claimed in claim 1, **characterised** in that said water or other evaporable liquid is the curing agent in a two-component system whose other component is absorbed in said decorative material.

3. The method as claimed in claim 1, **characterised** in that said water or other evaporable liquid dissolves said decorative material after application thereof.

4. The method as claimed in claim 1, **characterised** in that a support is applied to said conveyor belt before said water or other evaporable liquid is applied thereto.

5. The method as claimed in claim 4, **characterised** in that said support consists of a fiber layer, such as a mineral wool felt, which remains in the finished product.

6. The method as claimed in claim 4, **characterised** in that said support consists of a release paper, a Teflon strip or the like, which is removable from said material after melting or sintering thereof.

7. The method as claimed in claim 4, **characterised** in that said support comprises a layer of a binding agent spread over a carrier, and a powder layer of uniform thickness, preferably PVC powder, spread over said layer of binding agent.

8. The method as claimed in claim 1, **characterised** in that the application of decorative material according to step b) is carried out by means of a trough formed with a slit and provided with, for example, a knurled roller.

## Patentansprüche

1. Verfahren zur Herstellung dekorativer Bahnen, Platten oder Tafeln, wobei
a) Wasser oder eine andere verdunstungsfähige Flüssigkeit in einem vorgegebenen Muster auf ein Förderband aufgetragen wird, und zwar mit Hilfe elektronisch gesteuerter Düsen, die über die gesamte Breite des Förderbandes verteilt und in einer Ventilvorrichtung angeordnet sind, welche mit einer Zuführung für Wasser oder eine andere verdunstungsfähige Flüssigkeit verbunden ist,
b) ein dekorativer Werkstoff in Form von Pulvern, Granulat oder Flocken auf das Förderband aufgebracht wird, woraufhin das Wasser oder die andere verdunstungsfähige Flüssigkeit und der darauf aufgebrachte dekorative Werkstoff wärmebehandelt werden.
c) jeder dekorative Werkstoff, der sich nach dem Auftragen außerhalb des Musters befindet, und jeglicher möglichenweise überschüssige dekorative Werkstoff im Muster entfernt werden,
d) die Schritte a), b) und c) so oft wiederholt werden, wie für das Endmuster erforderlich, während jedes Mal Wasser oder die andere verdunstungsfähige Flüssigkeit in einem neuen Muster und ein dekorativer Werkstoff einer Farbe und/oder einer Struktur aufgetragen wird, die sich von der des zuerst aufgetragenen dekorativen Werkstoffs unterscheidet,
e) das Wasser oder die andere verdunstungsfähige Flüssigkeit verdunstet oder ein Bestandteil des dekorativen Werkstoffs wird, und
f) der dekorative Werkstoff zu einer kohärenten Schicht verschmolzen oder gesintert wird.

2. Verfahren nach Anspruch 1, **gekennzeichnet dadurch, daß** das Wasser oder die andere verdunstungsfähige Flüssigkeit das Härtungsmittel in einem Zwei-Komponenten-System ist, dessen andere Komponente von dem dekorativen Werkstoff absorbiert wird.

3. Verfahren nach Anspruch 1, **gekennzeichnet dadurch, daß** das Wasser oder die andere verdunstungsfähige Flüssigkeit den dekorativen Werkstoff nach dessen Auftragung auflöst.

4. Verfahren nach Anspruch 1, **dadurch gekennzeichnet, daß** eine Unterlage auf das Förderband aufgebracht wird bevor das Wasser oder die andere verdunstungsfähige Flüssigkeit darauf aufgetragen wird.

5. Verfahren nach Anspruch 4, **dadurch gekennzeichnet, daß** die Unterlage aus einer Faserschicht, z.B. einem Mineralwollenfilz besteht, die im fertigen Erzeugnis verbleibt.

6. Verfahren nach Anspruch 4, **dadurch gekennzeichnet, daß** die Unterlage aus einem Trennschichtpapier, einem Teflonstreifen oder ähnlichem, besteht, der nach dem Schmelzen oder Sintern von dem Werkstoff entfernt werden kann.

7. Verfahren nach Anspruch 4, **dadurch gekennzeichnet, daß** die Unterlage eine Schicht eines Bindemittels. die über einen Träger verteilt wird, und eine über die Bindemittelschicht verteilte Pulverschicht, vorzugsweise PVC-Pulver, mit gleichmäßiger Dicke umfaßt.

8. Verfahren nach Anspruch 1, **dadurch gekennzeichnet, daß** die Aufbringung des dekorativen Werkstoffs gemäß Schritt b) mit Hilfe einer Zuflußwanne mit Schlitz erfolgt, die beispielsweise eine gerändelte Walze aufweist.

## Revendications

1. Procédé de fabrication de bandes, feuilles ou panneaux décoratifs, dans lequel :
a) on dépose de l'eau ou un autre liquide évaporable sur une courroie transporteuse dans un dessin prédéterminé, au moyen de buses commandées électroniquement qui sont réparties sur toute la largeur de ladite courroie transporteuse, et qui sont agencées en un ensemble de vannes relié à une alimentation en eau ou autre liquide évaporable ;
b) on dépose une matière décorative, présentée sous la forme de poudres, granules ou paillettes, sur ladite courroie transporteuse, à la suite de quoi on soumet l'eau ou un autre liquide évaporable, et la matière décorative déposée sur cette eau ou ce liquide à l'action de la chaleur,
c) on élimine la matière décorative qui, au moment du dépôt, se trouve à l'extérieur du dessin, ainsi que l'éventuel excès de matière décorative, qui peut se trouver dans les limites du dessin,
d) on répète les phases a) et b) et c) le nombre de fois nécessaire pour obtenir le dessin final, en déposant à chaque fois ladite eau ou autre liquide évaporable dans un nouveau dessin, et une matière décorative d'une couleur et/ou d'une structure différentes de celles de la matière décorative déposée en premier lieu,
e) on évapore ladite eau ou ledit autre liquide évaporable ou on le contraint à s'inclure en tant que élément constitutif dans ladite matière décorative, et
f) on fond ou fritte ladite matière décorative pour former une couche cohérente.

2. Procédé selon la revendication 1, caractérisé en ce que ladite eau ou ledit autre liquide évaporable est l'agent durcisseur d'un système à deux composants dont l'autre composant est absorbé dans ladite matière décorative.

3. Procédé selon la revendication 1, caractérisé en ce que ladite eau ou ledit autre liquide évaporable dissout ladite matière décorative après son dépôt.

4. Procédé selon la revendication 1, caractérisé en ce qu'on dépose un support sur ladite courroie transporteuse avant que ladite eau ou ledit autre liquide évaporable n'y soit déposé.

5. Procédé selon la revendication 4, caractérisé en ce que ledit support est composé d'une couche fibreuse, telle qu'un feutre de laine minérale, qui reste dans le produit fini.

6. Procédé selon la revendication 4, caractérisé en ce que ledit support est composé d'un papier anti-adhésif, une bande de Téflon ou analogue, qui peut être séparée de ladite matière après sa fusion ou son frittage.

7. Procédé selon la revendication 4, caractérisé en ce que ledit support comprend une couche d'un agent liant répandu sur un support, et une couche de poudre d'épaisseur uniforme, de préférence de poudre de PVC, répandue sur ladite couche d'agent liant.

8. Procédé selon la revendication 1, caractérisé en ce que l'application de la matière décorative selon la phase b) est exécutée au moyen d'une trémie munie d'une fente et équipée, par exemple, d'un rouleau moleté.
